# DEMANDE DE BREVET EUROPEEN

(11) **EP 4 737 205 A1**
(43) Date de publication de la demande: **06.05.2026**
(21) Numéro de dépôt: 25211652.0
(22) Date de dépôt: 28.10.2025
(51) Int. Cl.: B60N 2/02, B60N 2/12

(54) **PROCÉDÉ DE DÉTECTION DE POSITIONS D'UN SIÈGE D'UN VÉHICULE POUVANT CAUSER UN RISQUE D'INSÉCURITÉ**

(30) Priorité: 31.10.2024 FR 2411970
(71) Demandeur: Faurecia Sièges d'Automobile, 92000 Nanterre (FR)
(72) Inventeur: GABILLARD, Guillaume, 14123 Cormelles-le-Royal (FR); FERRE, Ludovic, 61100 Flers (FR); THOMMEREL, Adrien, 61430 Athis-de-L'Orne (FR)
(74) Mandataire: Plasseraud IP

(57) **Abrégé**

Procédé de détection de positions d'un siège d'un véhicule pouvant causer un risque d'insécurité pour l'occupant du siège ; le siège comportant une glissière s'étendant selon une direction longitudinale, une assise montée coulissante sur la glissière, et un dossier articulé à l'assise par l'intermédiaire d'un premier axe d'articulation, une direction verticale étant perpendiculaire à la direction longitudinale et au premier axe d'articulation, un point repère étant défini sur une zone du dossier du siège, une droite repère étant définie, un point d'origine étant défini sur la droite repère. Le procédé comprend :
a) une détermination (42) d'un écart entre le point d'origine et le projeté du point repère sur la droite repère et selon une direction de projection,
b) une comparaison (44) de l'écart à un seuil,
c) une génération (46) d'un signal représentatif d'un risque d'insécurité lorsque l'écart est supérieur au seuil.

## Description

### Domaine technique de l'invention

L'invention est relative au véhicule et en particulier au véhicule automobile. L'invention concerne un procédé de détection de positions d'un siège d'un véhicule pouvant causer un risque d'insécurité pour l'occupant du siège.

### Etat de la technique antérieure

Un occupant de siège de véhicule est attaché à son siège par une ceinture de sécurité. Toutefois, dans certain cas, cette ceinture de sécurité n'assure pas pleinement la fonction de retenue du passager. En effet, lorsque le siège est trop vers l'arrière ou lorsque le dossier de siège est trop incliné, la ceinture de sécurité n'est plus en appui sur les pectoraux de l'occupant du siège. Dans ce cas, lors d'un choc frontal, l'occupant du siège peut passer par-dessus ou glisser sous la ceinture.

### Présentation de l'invention

Le but de la présente invention est de proposer un procédé de détection permettant d'éviter une telle situation en alertant l'occupant du siège ou en empêchant une mise en place de positions du siège pouvant entrainer un tel risque.

### Résumé de l'invention

La présente invention a pour objet un procédé de détection de positions d'un siège d'un véhicule pouvant causer un risque d'insécurité pour l'occupant du siège ; le siège comportant au moins une glissière s'étendant selon une direction longitudinale, une assise montée coulissante sur la au moins une glissière, et un dossier articulé à l'assise par l'intermédiaire d'un premier axe d'articulation, une direction verticale étant perpendiculaire à la direction longitudinale et au premier axe d'articulation, un point repère étant défini sur une zone du dossier du siège,
une droite repère étant définie,
un point d'origine étant défini sur la droite repère, caractérisé en ce que le procédé comprend :
   a) une détermination d'un écart entre le point d'origine et le projeté du point repère sur la droite repère et selon une direction de projection,
   b) une comparaison de l'écart à un seuil,
   c) une génération d'un signal représentatif d'un risque d'insécurité lorsque l'écart (E) est supérieur au seuil.

Les caractéristiques exposées dans les paragraphes suivants peuvent, optionnellement, être mises en œuvre. Elles peuvent être mises en œuvre indépendamment les unes des autres ou en combinaison les unes avec les autres :
- la détermination de l'écart comprend une détermination d'un premier intervalle entre le point d'origine et une position sur la droite repère d'un premier point de localisation, le premier point de localisation étant le projeté sur la droite repère selon la direction de projection d'un point du premier axe d'articulation du siège.
- le seuil est déterminé en fonction de la position du premier point de localisation et d'une table de correspondance.
- le procédé comprend une détermination de la position du premier point de localisation à partir d'un premier paramètre, le premier paramètre étant obtenu à partir d'une deuxième cartographie et d'une deuxième valeur représentative d'une course effectuée par un deuxième actionneur; le deuxième actionneur étant configuré pour déplacer le siège par rapport à la au moins une glissière selon la direction longitudinale.
- Le procédé comprend une détermination de la position du premier point de localisation à partir d'un deuxième paramètre, le deuxième paramètre étant obtenu à partir d'une troisième cartographie et d'une troisième valeur représentative d'une course effectuée par un troisième actionneur, le troisième actionneur étant configuré pour relever ou abaisser le siège.
- Le deuxième paramètre est additionné ou soustrait au premier paramètre en fonction du sens du déplacement du siège généré par le deuxième actionneur et du sens du déplacement du siège généré par le troisième actionneur.
- la détermination de l'écart comprend une détermination d'un premier angle d'inclinaison du dossier par rapport à la droite repère, le premier angle d'inclinaison étant déterminé à partir d'une première cartographie et d'une première valeur représentative d'une course effectuée par un premier actionneur, le premier actionneur étant configuré pour incliner le dossier par rapport à l'assise.
- La détermination de l'écart comprend une détermination d'une première amplitude d'inclinaison représentative de l'inclinaison du dossier par rapport à la droite repère, la première amplitude d'inclinaison est déterminée par multiplication d'un cosinus du premier angle d'inclinaison par une première longueur, la première longueur étant la plus courte distance entre le point repère et un point du premier axe d'articulation.

La détermination de l'écart comprend l'addition du premier intervalle et de la première amplitude d'inclinaison.
- Le siège comporte une embase montée coulissante sur ladite au moins une glissière et un ensemble assise et dossier, l'ensemble assise et dossier étant articulé à l'embase par l'intermédiaire d'un deuxième axe d'articulation, et dans lequel la détermination de l'écart comprend une détermination d'un deuxième intervalle entre le point d'origine et une position d'un deuxième point de localisation, le deuxième point de localisation étant le projeté sur la droite repère selon la direction de projection d'un point du deuxième axe d'articulation du siège.
- La détermination de l'écart comprend une détermination d'un deuxième angle d'inclinaison, le deuxième angle d'inclinaison étant représentatif de l'inclinaison de l'ensemble assise et dossier par rapport à la droite repère, le deuxième angle d'inclinaison étant déterminé à partir d'une quatrième cartographie et d'une quatrième valeur représentative d'une course effectuée par un quatrième actionneur, le quatrième actionneur étant configuré pour incliner l'ensemble assise et dossier par rapport à l'embase.
- La détermination de l'écart comprend une détermination d'une deuxième amplitude d'inclinaison de l'ensemble assise et dossier par rapport à la droite repère, la deuxième amplitude d'inclinaison étant déterminée par multiplication d'un cosinus du deuxième angle d'inclinaison par une deuxième longueur, la deuxième longueur étant la plus courte distance entre le point repère et un point du deuxième axe d'articulation.
- La détermination de l'écart comprend l'addition du deuxième intervalle et de la deuxième amplitude d'inclinaison.
- Le procédé comporte un arrêt d'au moins un actionneur en fonctionnement parmi un premier actionneur, un deuxième actionneur et un troisième actionneur lorsqu'un signal représentatif d'un risque d'insécurité est généré ; le premier actionneur étant configuré pour incliner le dossier par rapport à l'assise, le deuxième actionneur étant configuré pour déplacer le siège par rapport à la au moins une glissière selon la direction longitudinale, le troisième actionneur étant configuré pour relever ou abaisser le siège.
- Le procédé comporte un arrêt du quatrième actionneur lorsqu'un signal représentatif d'un risque d'insécurité est généré, le quatrième actionneur étant configuré pour faire pivoter l'ensemble assise et dossier autour d'un deuxième axe d'articulation.
- Le point repère est situé sur une zone du dossier, située au-dessus d'un plan horizontal passant par le milieu du dossier, le milieu du dossier étant situé entre le bord supérieure et le bord inférieure du dossier.
- Les étapes a) à c) ne sont pas mises en œuvre lorsque le véhicule est à l'arrêt.
- Les étapes a) à c) sont mises en œuvre à chaque fois que au moins un actionneur est mis en fonctionnement parmi un premier actionneur, un deuxième actionneur et un troisième actionneur ; le premier actionneur étant configuré pour incliner le dossier par rapport à l'assise, le deuxième actionneur étant configuré pour déplacer le siège par rapport à la au moins une glissière selon la direction longitudinale, le troisième actionneur étant configuré pour relever ou abaisser le siège.

### Brève description des figures

[Fig. 1] est une vue en perspective d'un premier siège sur lequel un procédé de détection selon l'invention peut être mis en œuvre ;
[Fig. 2] est une vue de côté du siège de la figure 1 et d'un exemple de système de détection pouvant être utilisé pour mettre en œuvre le procédé de détection selon l'invention;
[Fig. 3] est une vue schématique en perspective illustrant un exemple de position du premier siège ne causant pas de risque d'insécurité pour l'occupant du siège ;
[Fig. 4] est une vue schématique en perspective illustrant un exemple de position du premier siège pouvant causer un risque d'insécurité pour l'occupant du siège ;
[Fig. 5] est un graphe représentant une courbe représentative du déplacement du premier siège en fonction de la direction longitudinale X et en fonction de la direction verticale Z;
[Fig. 6] est un diagramme illustrant les étapes d'un procédé de détection selon un premier mode de réalisation de l'invention ;
[Fig. 7] est un diagramme illustrant les étapes du procédé de détection selon un deuxième mode de réalisation de l'invention ;
[Fig. 8] est un diagramme illustrant les étapes du procédé de détection selon un troisième mode de réalisation de l'invention;
[Fig. 9] est un schéma représentant la direction de projection dans une variante de réalisation du procédé de détection ;
[Fig. 10] est une vue en perspective d'un deuxième siège sur lequel un procédé de détection selon l'invention peut être mis en œuvre ;
[Fig. 11] est une vue de côté du siège illustré sur la figure 10 et du système de détection illustré sur la figure 2 ;
[Fig. 12] est un diagramme illustrant les étapes du procédé de détection selon un quatrième mode de réalisation pouvant être mis en œuvre notamment avec le deuxième siège illustré sur les figures 10 et 11.

### Description détaillée de l'invention

Dans la description qui suit, les indications de positionnement dans l'espace telles que haut, bas, supérieur, inférieur, horizontal, vertical etc. sont à interpréter en fonction de la position d'utilisation usuelle d'un siège de véhicule.

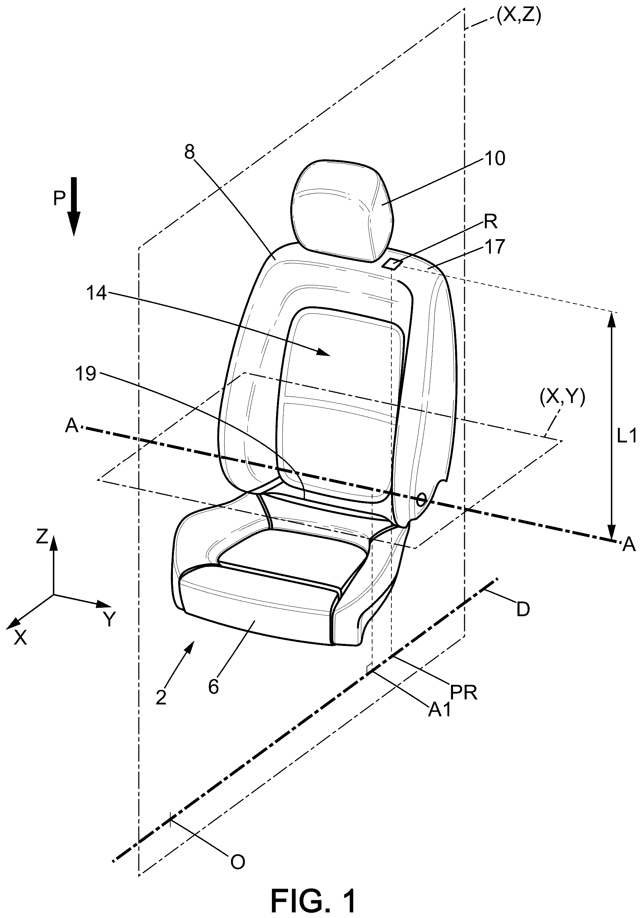

Les sièges 2 et 72 sont définis par rapport à un repère orthogonal illustré sur la figure 1. Par direction longitudinale X, on entend une direction horizontale s'étendant entre l'avant et l'arrière du siège de véhicule. Par direction transversale Y, on entend une direction horizontale, s'étendant depuis un côté du siège de véhicule vers l'autre côté du siège. Par direction verticale Z, on entend la direction perpendiculaire aux directions longitudinale X et transversale Y.

Dans la description qui suit, les indications de positionnement dans l'espace telles que derrière, devant, haut, bas, avant, arrière, supérieur, inférieur, horizontal, vertical etc. sont à interpréter en fonction de la position d'utilisation usuelle d'un siège dans un véhicule. Plus particulièrement, les orientations relatives à l'avant et à l'arrière sont relatives à la position d'utilisation usuelle d'un véhicule et à la position usuelle d'un siège dans un véhicule. La direction avant étant la direction d'un véhicule roulant en marche avant.

L'invention concerne un procédé de détection de positions d'un siège de véhicule pouvant causer un risque d'insécurité pour l'occupant du siège.

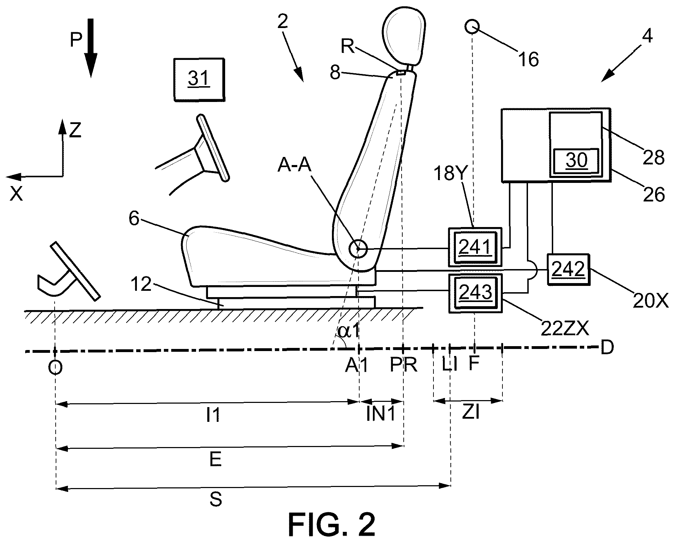

Ce procédé de détection peut être mis en œuvre par sur un premier siège 2 illustré sur les figures 1 et 2, et par un système de détection 4 illustré sur la figure 2.

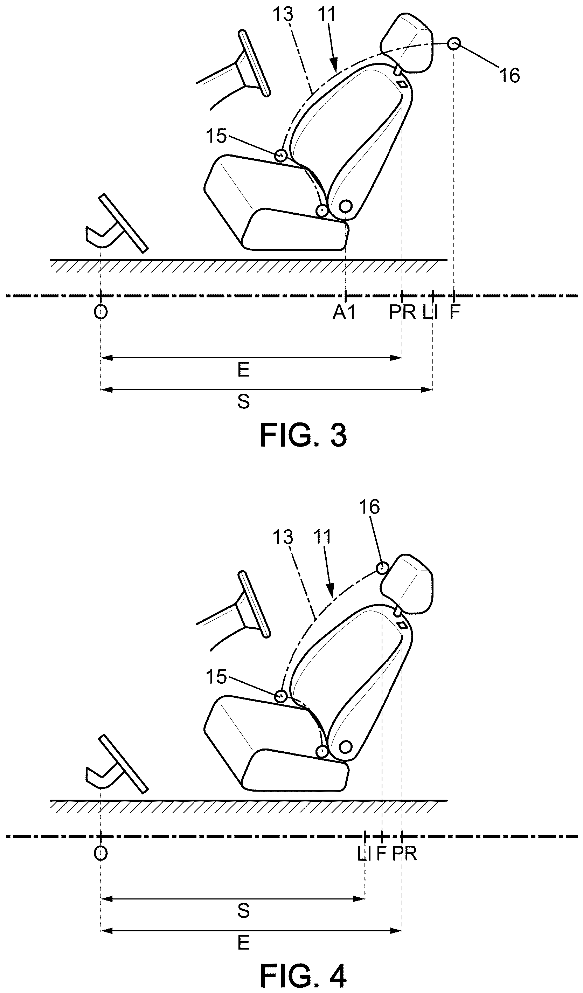

Le premier siège 2 est un siège de véhicule, en particulier un siège de véhicule automobile. Le premier siège 2 comporte une assise 6, un dossier 8 équipé d'un appui-tête 10. Le dossier 8 est articulé à l'assise par l'intermédiaire d'un premier axe d'articulation A-A s'étendant selon la direction transversale Y. L'assise est montée sur deux glissières 12 s'étendant selon une direction longitudinale X. Seule une glissière 12 a été représentée sur la figure 2. En référence aux figures 3 et 4, la ceinture de sécurité 11 du premier siège comporte une sangle 13, une attache 15 et une boucle 16 de retenue supérieure de la sangle. La boucle de retenue 16 est fixée à une paroi intérieure de la carrosserie du véhicule.

Pour les besoins de la description de l'invention, des paramètres permettant la caractérisation de la localisation relative du premier siège par rapport à la position d'attache de la boucle de retenue 16 sont définis. Ces paramètres comprennent un point repère R, une droite repère D, un point d'origine O et une direction de projection P. Au cours de chaque déplacement du premier siège, la nouvelle position du premier siège sera définie par rapport à ces paramètres pour déterminer si cette position peut entrainer un risque d'insécurité.

Le point repère R est défini sur une zone 14 du dossier 8 du premier siège. Le point repère R est un point virtuel qui a pour seul but de caractériser la localisation de l'épaule de l'occupant du premier siège. Comme cette localisation varie en fonction de la taille de l'occupant du siège, une position moyenne située sur une zone du siège est choisie par le constructeur comme point de repère R. Le point repère R est représentatif d'une projection sur le dossier d'une position moyenne d'une épaule d'un occupant du siège. Le point repère R est défini dans une zone 14 du dossier située au-dessus d'un plan horizontal (X,Y) passant par le milieu du dossier. Dans la présente demande, on appelle « milieu du dossier », le centre du dossier en considérant la direction longitudinale du dossier. Autrement dit, le milieu du dossier est situé entre le bord supérieur 17 et le bord inférieur 19 du dossier.

De préférence, le point repère R est situé sur ou proche du bord supérieur 17 du dossier. De manière encore plus préférentielle, le point repère R est situé du côté du premier siège où la boucle de retenue 16 est située, comme visible sur les figures 3 et 4.

Sur la figure 1, le point repère R a été illustré sur le bord supérieur 17 du dossier, à gauche de l'appui-tête.

La droite repère D est par exemple contenue dans un plan vertical (X, Z) passant par le point de repère R. La droite repère D s'étend par exemple parallèlement à la direction longitudinale X ou parallèlement aux glissières 12

Le point d'origine O est choisi sur la droite repère D. Le point d'origine est par exemple positionné devant la position la plus avancée du premier siège 2 par rapport aux glissières 12. Sur la figure 2, à titre d'exemple et nullement limitatif, le point d'origine O a été choisi proche des pédales du véhicule sur la figure 2.

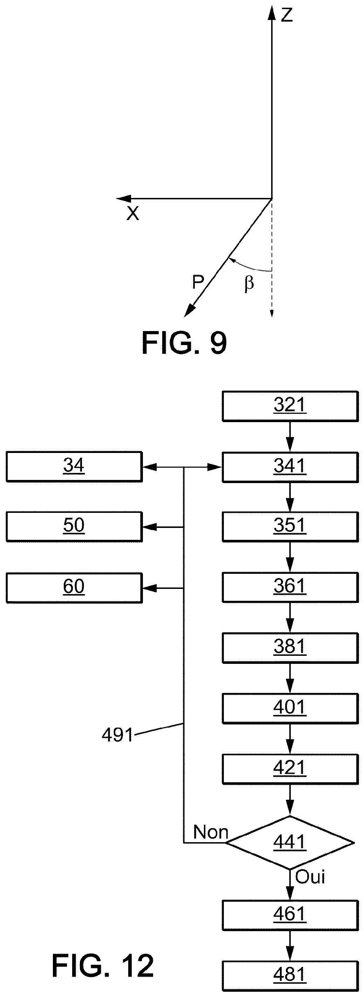

Dans les modes réalisation représentés à titre illustratif, la direction de projection P est dirigée selon la direction verticale Z et dans un sens opposé à la direction verticale Z. Selon une variante, la direction de projection P fait un angle β compris entre 8 degrés et 30 degrés par rapport à la direction verticale Z. L'angle β est mesuré par rapport à la direction verticale Z et selon un sens de rotation horaire, comme représenté sur la figure 9.

Pour les besoins de la description, on définit également un premier point de localisation A1 et un point de projection F.

Le premier point de localisation A1 est le projeté selon la direction de projection P d'un point du premier axe d'articulation A-A du premier siège sur la droite repère D. Dit autrement, le premier point de localisation A1 est l'intersection entre la droite repère D et une droite ayant pour direction la direction de projection P et croisant le premier axe d'articulation A-A.

Le premier point de localisation A1 peut se situer à des positions différentes sur la droite repère D en fonction de la position du premier siège par rapport aux glissières 12. Par exemple, le premier point de localisation A1 est plus proche du point d'origine O dans la position du premier siège illustrée sur la figure 3 que dans la position du premier siège illustrée sur la figure 4.

Comme illustré sur la figure 2, le point de projection F est défini comme étant la projection sur la droite repère D, selon la direction de projection P de la position d'attache de la boucle de retenue 16 de la ceinture de sécurité. Dans le mode de réalisation illustré à titre d'exemple sur les figures, la direction de projection P est parallèle et de sens opposé à la direction verticale Z.

Le point repère R, la droite repère D et le point d'origine O sont des points et droites fictifs déterminés uniquement pour permettre la détermination de données permettant la mise en œuvre du procédé de détection selon l'invention. Ces données sont la position du premier point de localisation A1 par rapport au point d'origine O, de la position du point de projection F par rapport au point d'origine O, d'une première longueur L1, d'une première cartographie C1, d'une deuxième cartographie C2, d'une troisième cartographie C3, de la position d'une zone d'insécurité ZI par rapport au point d'origine O et d'une table de correspondance TC.

Ces données varient en fonction de la structure du premier siège, du choix de la position du point repère R sur le dossier et de la position relative du premier siège par rapport à la position d'attache à la carrosserie de la boucle de retenue 16 de la ceinture de sécurité. Par structure du premier siège, on entend notamment la longueur de l'assise selon la direction longitudinale X, la longueur du dossier entre le bas du dossier et le haut du dossier, la position du premier axe d'articulation A-A et la longueur des glissières.

En référence à la figure 2, le premier siège 2 comporte un premier actionneur 18Y configuré pour incliner le dossier 8 par rapport à l'assise 6. Le premier siège 2 comporte en outre un deuxième actionneur 20X configuré pour déplacer le premier siège par rapport aux glissières 12 selon la direction longitudinale X. Enfin, le premier siège 2 comporte un troisième actionneur 22ZX, dit actionneur de réhausse, configuré pour réhausser le premier siège 2. Dit autrement, le troisième actionneur 22ZX est configuré pour relever ou abaisser le premier siège. Le mouvement de relevage ou d'abaissement du premier siège est réalisé selon une direction verticale Z. Il est généralement accompagné par un mouvement selon la direction longitudinale X.

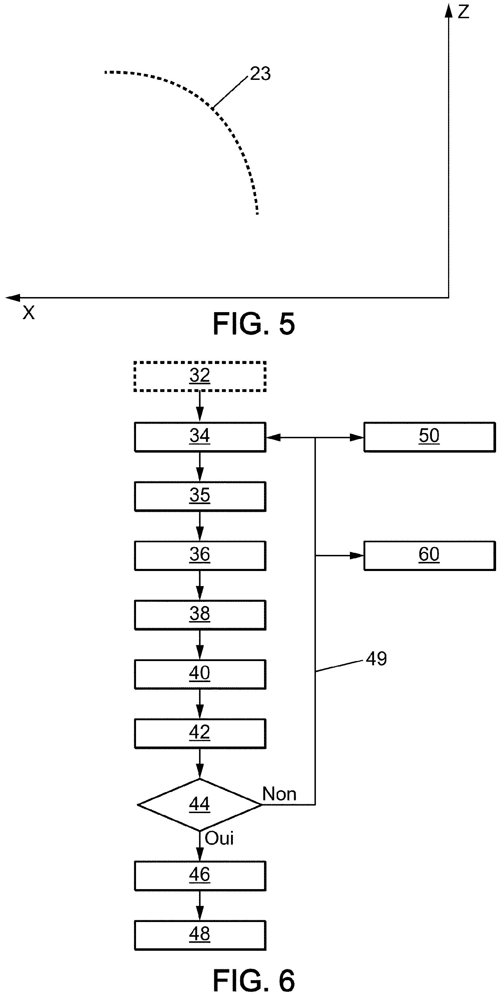

Ce mouvement est causé par la structure et le mécanisme de relevage du premier siège. La figure 5 est un graphe comprenant une courbe 23 représentative du déplacement du premier siège en fonction de la direction longitudinale X et en fonction de la direction verticale Z. La courbe 23 illustre le mouvement du premier siège lorsqu'il est entrainé uniquement par le troisième actionneur 22ZX.

En variante, le troisième actionneur 22ZX est configuré pour relever ou abaisser le premier siège par un mouvement uniquement dirigé selon la direction Z.

Le premier actionneur 18Y, le deuxième actionneur 20X et le troisième actionneur 22ZX peuvent comprendre une carte électronique 241, 242, 243 propre à générer une information relative à la course effectuée par chaque actionneur.

Le premier siège 2 comporte en outre une interface homme-machine 31 propre à recevoir une commande de déplacement d'un élément du premier siège et à transmettre cette commande aux actionneurs. Cet interface homme-machine est par exemple un écran tactile disposé sur le tableau de bord ou un dispositif de reconnaissance vocale.

Le système de détection 4 comprend un processeur 26, par exemple un contrôleur, un microcontrôleur, un dispositif programmable ou un circuit intégré spécifique (ASIC). Le processeur 26 est connecté à la carte électronique 241 du premier actionneur, à la carte électronique 242 du deuxième actionneur et à la carte électronique 243 du troisième actionneur.

Le processeur 26 comprend une mémoire 28 et un code exécutable 30.

La mémoire 28 comprend une mémoire vive, notée RAM et une mémoire morte notée ROM.

Le code exécutable 30 permet de mettre en œuvre le procédé de détection décrit ci-dessous à partir des informations de courses effectuées par chaque actionneur, de la première longueur L1, de la première cartographie C1, de la deuxième cartographie C2, de la troisième cartographie C3, de la position du point de projection F par rapport au point d'origine O, de la position de la zone d'insécurité ZI par rapport au point d'origine O et d'une table de correspondance TC déterminés et enregistrés dans la mémoire au cours d'une phase préalable ainsi que d'un point limite L et d'un seuil S déterminés au cours du procédé de détection.

En variante, le premier actionneur 18Y, le deuxième actionneur 20X et le troisième actionneur 22ZX comprennent chacun un dispositif de mesure de la course effectuée par cet actionneur. Par exemple, ce dispositif de mesure comprend un aimant monté sur l'arbre rotatif de sortie de l'actionneur et un capteur magnétique agencé en regard de cet aimant. Dans ce cas, le processeur 26 est connecté aux dispositifs de mesure qui génèrent chacun une information de course effectuée par chaque actionneur.

En référence à la figure 6, le procédé de détection d'une position risquée selon un premier mode de réalisation est décrit. Ce procédé peut être mis en œuvre par le premier siège 2 et le deuxième siège 72. Par simplification, le premier siège 2 et le deuxième siège 72 seront appelés « siège » ci-après.

Le procédé débute par une phase préalable 32. La phase préalable 32 est généralement réalisée par le constructeur du siège ou le constructeur du véhicule pour chaque type de siège et pour chaque agencement de véhicule. Au cours de la phase préalable, le point repère R, la droite repère D et le point d'origine O sont définis en prenant en compte les définitions explicitées ci-dessus.

De plus, au cours de la phase préalable, la plus petite distance entre le point repère R et un point du premier axe d'articulation A-A est déterminée par une mesure de distance par un opérateur. Cette plus petite distance est appelée première longueur L1 ci-après. La première longueur L1 est fonction de la structure du siège et de l'emplacement du point repère R choisi. La première longueur L1 est enregistrée dans la mémoire 28.

Au cours de la phase préalable, la position du point de projection F est également définie par rapport au point d'origine O par des mesures expérimentales et en fonction de l'agencement à l'intérieur du véhicule, et notamment en fonction de la position de l'attache de la boucle de retenue 16.

Au cours de la phase préalable, la zone d'insécurité ZI est définie par rapport au point de projection F par des mesures expérimentales en fonction de la forme et de la dimension du siège et de la plage de possibilité de course de déplacement du siège selon la direction longitudinale.

Par exemple, une première distance est définie devant le point de projection et une deuxième distance est définie derrière le point de projection F. La première distance est par exemple comprise entre 4 centimètres et 12 centimètres. De préférence, la première distance est comprise entre 6 centimètres et 10 centimètres.

La deuxième distance est par exemple comprise entre 4 centimètres et 12 centimètres. De préférence, la deuxième distance est comprise entre 6 centimètres et 10 centimètres. La première distance peut être égale de la deuxième distance. En variante, La première distance est différente de la deuxième distance.

Lors de la phase préalable 32, une première cartographie C1 est déterminée par des mesures expérimentales effectuées par un opérateur. Cette première cartographie C1 définit les premiers angles d'inclinaison α1 en fonction des courses effectuées par le premier actionneur 18Y. Le premier angle d'inclinaison α1 est représentatif de l'inclinaison du dossier 8 par rapport à la droite repère D comme visible sur la figure 2. La première cartographie C1 est enregistrée dans la mémoire 28.

Lors de la phase préalable, une première position du premier point de localisation A1 est déterminée par une mesure de distance par un opérateur. Cette première position est, par exemple déterminée lorsque le deuxième actionneur 20X et le troisième actionneur 22ZX sont en bout de course. La position du premier point de localisation A1 est ainsi déterminée lorsque le siège est dans une position la plus en avant possible.

Puis, d'autres positions du premier point de localisation A1 sur la droite repère D et par rapport au point d'origine O sont déterminées par un opérateur, pour différentes courses effectuées par le deuxième actionneur 20X, le troisième actionneur 22ZX n'étant pas mis en fonctionnement. Une deuxième cartographie C2 définit les positions du premier point de localisation A1 en fonction des courses correspondantes effectuées par le deuxième actionneur. La deuxième cartographie C2 est enregistrée dans la mémoire 28.

De la même façon, des positions du premier point de localisation A1 sont déterminées par un opérateur, pour différentes courses effectuées par le troisième actionneur 22ZX, le deuxième actionneur 20X n'étant pas mis en fonctionnement. Une troisième cartographie C3 définit ces positions du premier point de localisation A1 en fonction des courses correspondantes effectuées par le troisième actionneur. La troisième cartographie C3 est enregistrée dans la mémoire 28 de sorte que le processeur 12 puisse déterminer la position du premier point de localisation A1 en fonction de la course effectuée par le troisième actionneur 22ZX.

Le processeur 12 est configuré pour déterminer la position du premier point de localisation A1 à partir de la deuxième cartographie C2, de la troisième cartographie C3, d'une information de course effectuée par le deuxième actionneur 20X et d'une information de course effectuée par le troisième actionneur 22ZX.

Au cours de la phase préalable, un point limite L est définit. Le point limite L représente le point sur la droite repère D à partir duquel un glissement de l'occupant du siège sous la sangle 13 de la ceinture de sécurité est possible. La position du point limite L est fonction de l'agencement à l'intérieur du véhicule et notamment en fonction de la position de la ceinture de sécurité et du siège. La position du point limite L varie de plus en fonction de la position du point de localisation A1 en raison de la variation de la position de la sangle de sécurité 13 par rapport à la position du siège selon la direction longitudinale X. En particulier, la position du point limite L varie à l'intérieur de la zone d'insécurité ZI

Une table de correspondance TC est établie, par expérimentation. La table de correspondance TC définit la position d'un point limite L en fonction de la position du premier point de localisation A1. En particulier, la position du point limite L varie à l'intérieur de la zone d'insécurité ZI en fonction de la position du point de localisation A1.

La première longueur L1, la première cartographie C1, la deuxième cartographie C2, la troisième cartographie C3, la position du point de projection F par rapport au point d'origine O, la position de la zone d'insécurité ZI par rapport au point d'origine O et la table de correspondance TC sont à définir préalablement à l'utilisation du procédé pour chaque type de siège et chaque agencement de véhicule. En conséquence, la phase préalable 32 doit être effectuée à chaque fois qu'un élément du siège est modifié ou que la position relative du siège par rapport à la position de l'attache de la boucle de 16 de la ceinture de sécurité est modifiée.

La première longueur L1, la première cartographie C1, la deuxième cartographie C2, la troisième cartographie C3, la position du point de projection F par rapport au point d'origine O, la position de la zone d'insécurité ZI par rapport au point d'origine O et la table de correspondance TC_sont enregistrées dans la mémoire à l'issus de la phase préalable.

Après la phase préalable, le processeur 26 met en œuvre les étapes du procédé de détection selon le premier mode de réalisation à partir des informations enregistrées dans la mémoire 28 au cours de la phase préalable et des informations de course effectuée reçues des cartes électroniques des actionneurs. Le procédé peut se poursuivre de différentes manières en fonction du type de demandes de déplacement du siège demandées par l'occupant du siège. Le procédé de détection selon le premier mode de réalisation illustré sur la figure 6 représente le cas dans lequel l'occupant du siège demande une inclinaison du dossier par l'intermédiaire de l'interface homme-machine 31.

Le procédé comprend alors une étape 34 au cours de laquelle l'interface homme-machine 31 transmet au premier actionneur 18Y une demande d'inclinaison du dossier 8 autour du premier axe d'articulation A-A. Le premier actionneur 18Y fait pivoter le dossier autour du premier axe d'articulation A-A par rapport à l'assise. La mise en fonctionnement du premier actionneur entraine la mise en œuvre des étapes 35 à 46 décrites ci-après par le processeur. Les étapes 35 à 46 ont lieu en continue au cours du mouvement de pivotement du dossier.

Pendant une étape 35, la carte électronique 241 transmet une information relative à la course effectuée par le premier actionneur 18Y au processeur 26.

Pendant une étape 36, le processeur 26 détermine, le premier angle d'inclinaison α1 du dossier 8 par rapport à la droite repère D à partir de l'information relative à la course effectuée reçue du premier actionneur, de la première cartographie C1 et du premier angle d'inclinaison précédent. Le premier angle d'inclinaison précédent est l'angle d'inclinaison du dossier avant pivotement de celui-ci au cours de l'étape 34. Le premier angle d'inclinaison précédent est stocké dans la mémoire 28. Le processeur 26 enregistre le nouveau premier angle d'inclinaison α1 dans la mémoire 28.

Au cours d'une étape 38, une première amplitude d'inclinaison IN1 du dossier est déterminée par multiplication d'un cosinus du premier angle d'inclinaison α1 par la première longueur L1. La première longueur L1est stockée dans la mémoire. Comme visible sur la figure 2, la première amplitude d'inclinaison IN1 est la distance entre le premier point de localisation A1 et le projeté PR du point repère R sur la droite repère D, selon une direction de projection P.

La première amplitude d'inclinaison IN1 peut être enregistrée dans la mémoire 28. Au cours d'une étape 40, un premier intervalle I1 est déterminé. Le premier intervalle I1 est la distance entre le point d'origine O et le premier point de localisation A1. Le premier intervalle I1 dépend de la position du siège. Le premier intervalle I1 est plus court dans la position du siège illustrée sur la figure 3 que dans la position du siège illustrée sur la figure 4.

Pour déterminer le premier intervalle I1, la position du premier point de localisation A1 par rapport au point d'origine O sur la droite repère D peut être déterminée par recherche d'une position du premier point de localisation préalablement enregistrée dans la mémoire. Cette méthode est utilisée lorsque seul le premier actionneur 18Y est en fonctionnement.

La position du premier point de localisation A1 peut également être obtenue à partir de la deuxième cartographie C2 et de la course ayant été effectuée par le deuxième actionneur 20X. Cette méthode est utilisée lorsque le deuxième actionneur est mis en fonctionnement simultanément au premier actionneur. La position du premier point de localisation A1 peut également être obtenue à partir de la troisième cartographie C3 et de la course ayant été effectuée par le troisième actionneur 22ZX. Cette méthode est utilisée lorsque le troisième actionneur est mis en fonctionnement simultanément au premier actionneur.

Au cours d'une étape 42, un écart E est déterminé par addition de la première amplitude d'inclinaison IN1 déterminée au cours de l'étape 38 et du premier intervalle I1 déterminé au cours de l'étape 40. L'écart E est la distance entre le point d'origine O et le projeté PR du point repère R sur la droite repère D, selon la direction de projection P.

Au cours d'une étape 44, la position du point limite L est déterminée en fonction de la position du premier point de localisation A1 à partir de la table de correspondance TC établie au cours de la phase préalable. A cet effet, la position du premier point de localisation A1 déterminé au cours de l'étape 40 est utilisé. Puis, le seuil S est déterminé. Le seuil S est la distance entre le point d'origine O et la position du point limite L. Enfin, l'écart déterminé E est comparé au seuil S déterminé.

Lorsque l'écart E déterminé est supérieur au seuil S, un signal représentatif d'un risque d'insécurité est généré, au cours d'une étape 46. La figure 4 représente une situation dans laquelle l'écart E est supérieur au seuil S.

La génération du signal représentatif d'un risque d'insécurité peut entrainer une mise à l'arrêt du fonctionnement du premier actionneur 18Y au cours d'une étape 48.

La figure 3 représente une situation dans laquelle l'écart E est inférieur au seuil S. Lorsque l'écart E déterminé est inférieur au seuil S, le procédé peut se poursuivre, au cours d'une étape 49 par la mise en œuvre du procédé de détection selon le deuxième mode de réalisation (illustré par l'étape 50), ou la mise en œuvre du procédé de détection selon le troisième mode de réalisation (étape 60) ou la poursuite de la mise en œuvre du procédé de détection selon le premier mode de réalisation (illustré par l'étape 34) en fonction de la nouvelle demande de déplacement du siège demandé par l'occupant du siège.

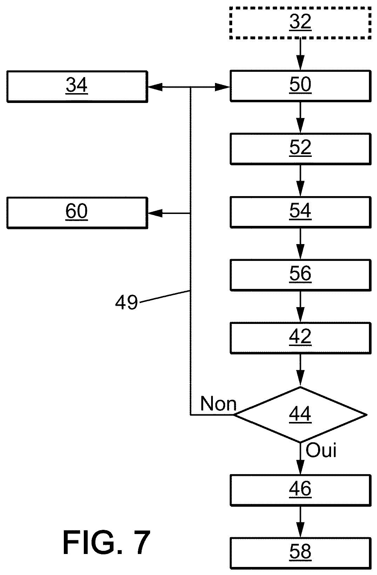

En référence à la figure 7, le procédé de détection d'une position risquée selon un deuxième mode de réalisation est décrit. Ce procédé peut être mis en œuvre par le premier siège 2 et le deuxième siège 72. Par simplification, le premier siège 2 et le deuxième siège 72 seront appelés « siège » ci-après.

Si la phase préalable n'a jamais été réalisée, le procédé débute par une phase préalable 32 Cette phase préalable est identique à la phase préalable décrite dans le procédé de détection selon le premier mode de réalisation. Puis, le procédé se poursuit par une étape 50. Si la phase préalable a déjà été réalisée, le procédé débute par l'étape 50, l'occupant du siège demande un déplacement du siège selon la direction longitudinale X par l'intermédiaire de l'interface homme-machine 31. L'interface homme-machine 31 transmet au deuxième actionneur 20X une demande de déplacement du siège selon la direction longitudinale X. Le siège est déplacé par rapport aux glissières selon la direction longitudinale X. La mise en fonctionnement du deuxième actionneur entraine la mise en œuvre par le processeur des étapes 52, 54, 56, 42, 44, 46 et 58 décrites ci-après. Les étapes 52, 54, 56, 42, 44, 46 et 58 ont lieu en continu au cours du mouvement de déplacement du siège.

Au cours d'une étape 52, la carte électronique 242 transmet une information relative à la course effectuée par le deuxième actionneur 20X au processeur 26.

Au cours d'une étape 54, le processeur 26 recherche la position du premier point de localisation A1 à l'aide de l'information de course réceptionnée, de la deuxième cartographie C2 et de la position précédente du premier point de localisation A1. La position précédente du premier point de localisation A1 est la position du premier point de localisation A1 avant le déplacement effectué au cours de l'étape 50. Le processeur détermine le premier intervalle I1. Le premier intervalle I1 est la distance entre le premier point de localisation A1 et le point d'origine O. Le processeur 26 enregistre la nouvelle position du premier point de localisation A1 dans la mémoire. Au cours d'une étape 56, la première amplitude d'inclinaison IN1 est déterminée. Cette détermination peut être réalisée par recherche de la première amplitude d'inclinaison IN1 dans la mémoire 28 ou par exécution des étapes 36 et 38 décrites ci-dessus si la première amplitude d'inclinaison IN1 n'est pas contenue dans la mémoire 28 ou si le premier actionneur 18 Y est en fonctionnement.

Le procédé se poursuit par l'étape 42, au cours de laquelle l'écart E est déterminé par addition de la première amplitude d'inclinaison IN1 déterminée au cours de l'étape 56 et du premier intervalle I1 déterminé au cours de l'étape 54.

Les étapes 44 et 46 ou 49 sont ensuite exécutées. Elles ne sont pas décrites à nouveau. Dans ce cas, au cours de l'étape 44, la position du point limite L est déterminée en fonction de la position du premier point de localisation A1 déterminé au cours de l'étape 54 à partir de la table de correspondance TC.

La génération du signal représentatif d'un risque d'insécurité peut entrainer une mise à l'arrêt du fonctionnement du deuxième actionneur 20X au cours d'une étape 58.

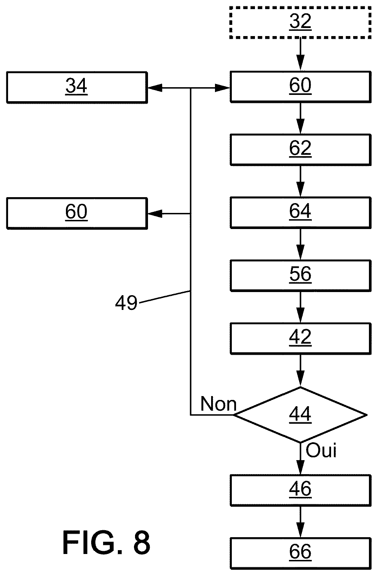

En référence à la figure 8, le procédé de détection d'une position risquée selon un troisième mode de réalisation est décrit. Ce procédé peut être mis en œuvre par le premier siège 2 et le deuxième siège 72. Par simplification, le premier siège et le deuxième siège seront appelés « siège » ci-après.

Si la phase préalable n'a jamais été réalisée, le procédé débute par une phase préalable 32 Cette phase préalable est identique à la phase préalable décrite dans le procédé de détection selon le premier mode de réalisation. Puis, le procédé se poursuit par une étape 60.

Si la phase préalable a déjà été réalisée, le procédé débute par l'étape 60 au cours de laquelle l'occupant du siège demande un relevage ou un abaissement du siège par l'intermédiaire de l'interface homme-machine 31. L'interface homme-machine 31 transmet au troisième actionneur 22ZX la demande de relevage ou d'abaissement du siège. Le siège est déplacé par le troisième actionneur 22ZX. La mise en fonctionnement du troisième actionneur entraine la mise en œuvre par le processeur des étapes 62, 64, 56, 42, 44, 46 et 66 décrites ci-après. Les étapes 62, 64, 56, 42, 44, 46 et 66 ont lieu en continu au cours du mouvement de déplacement du siège. Au cours d'une étape 62, la carte électronique 243 transmet une information de course effectuée par le troisième actionneur 22ZX au processeur 26.

Au cours d'une étape 64, le processeur 26 détermine le premier intervalle I1. Le premier intervalle I1 est la distance entre le premier point de localisation A1 et le point d'origine O. A cet effet, le processeur détermine la position du premier point de localisation A1 par rapport au point d'origine O à l'aide de l'information de course réceptionnée, de la troisième cartographie C3 et de la précédente position du premier point de localisation A1. La position précédente du premier point de localisation A1 est la position du premier point de localisation A1 avant le déplacement effectué au cours de l'étape 60. Le processeur 26 enregistre la nouvelle position du premier point de localisation A1 dans la mémoire.

Le procédé se poursuit par l'étape 56 décrite dans le procédé selon le deuxième mode de réalisation.

Le procédé se poursuit par l'étape 42, au cours de laquelle l'écart E est déterminé par addition de la première amplitude d'inclinaison IN1 déterminée au cours de l'étape 56 et du premier intervalle I1 déterminé au cours de l'étape 64.

Les étapes 44 et 46, et éventuellement l'étape 49 sont ensuite exécutées. Elles ne sont pas décrites à nouveau. Dans ce cas, au cours de l'étape 44, la position du point limite L est déterminée en fonction de la position du premier point de localisation A1 à partir de la table de correspondance TC. A ce effet, La position du premier point de localisation A1 déterminé au cours de l'étape 64 est utilisée.

La génération du signal représentatif d'un risque d'insécurité peut entrainer une mise à l'arrêt du fonctionnement du troisième actionneur 22ZX au cours d'une étape 66.

Les trois modes de réalisation du procédé de détection peuvent être réalisés ensemble ou un par un. Deux modes de réalisation parmi les trois peuvent être réalisés ensemble ou un par un. Un seul mode de réalisation peut également être réalisé.

Lorsque le siège 2, 72 est déplacé selon la direction longitudinale X et que le siège 2, 72 est relevé ou rabaissé simultanément, le premier point de localisation A1 est déterminé en ajoutant ou en retranchant la distance parcourue par le troisième actionneur 22ZX à la distance parcourue par le deuxième actionneur 20X. En particulier, la distance parcourue par le troisième actionneur 22ZX (dit deuxième paramètre) est ajouté à la distance parcourue par le deuxième actionneur 20X (dit premier paramètre), lorsque le siège 2, 72 est déplacé vers l'arrière et qu'il est rabaissé en même temps ou lorsque le siège est déplacé vers l'avant et qu'il est relevé en même temps.

En particulier, la distance parcourue par le troisième actionneur 22ZX (dit deuxième paramètre) est soustrait à la distance parcourue par le deuxième actionneur 20X (dit premier paramètre), lorsque le siège 2, 72 est déplacé vers l'arrière et qu'il est relevé en même temps ou lorsque le siège est déplacé vers l'avant et qu'il est abaissé en même temps.

De préférence, les étapes du procédé de détection selon l'invention sont mises en œuvre lorsque le véhicule roule et lorsqu'il est à l'arrêt pour une courte durée, par exemple à un feu de signalisation.

De préférence, les étapes du procédé de détection selon les quatre modes de réalisation, sont mises en œuvre lorsque le véhicule est à l'arrêt.

De préférence, les étapes du procédé de détection selon les quatre modes de réalisation sont mises en œuvre à chaque fois qu'au moins un actionneur est mis en fonctionnement.

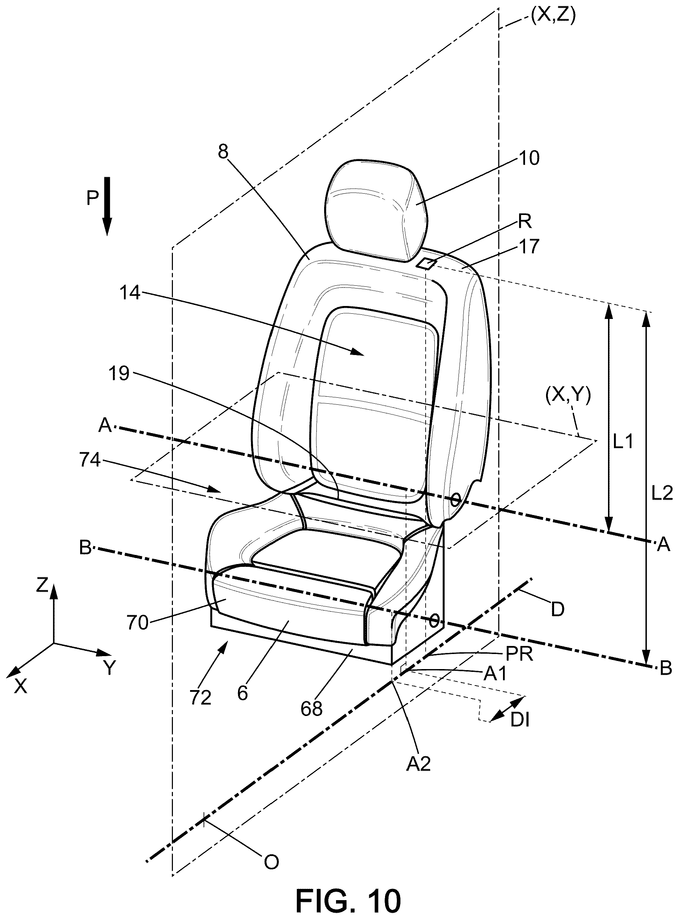

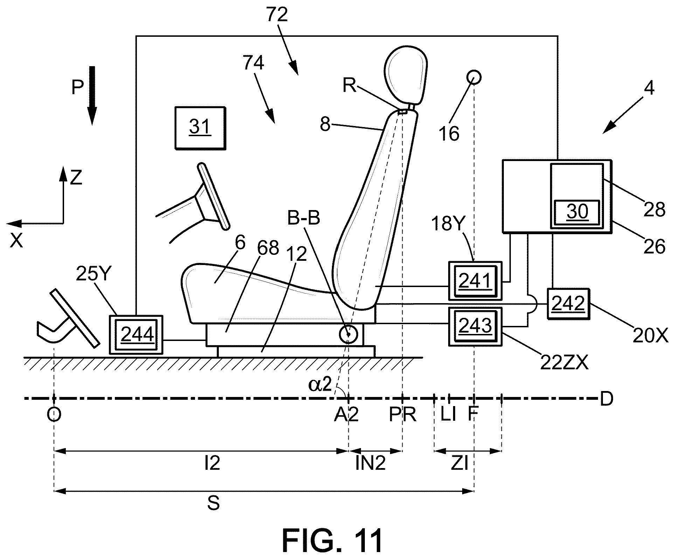

Les figures 10 et 11 représentent un deuxième siège 72 sur lequel un procédé de détection selon l'invention peut être mis en œuvre.

Le deuxième siège 72 est identique au premier siège 2 illustré sur la figure 1 à l'exception des éléments techniques décrits ci-dessous. Ainsi, les éléments techniques du premier siège identiques aux éléments techniques du deuxième siège 72, sont référencés par les mêmes références et ne seront pas décrits à nouveau. L'assise 6 comprend une embase 68 et une armature d'assise 70. L'embase 68 est montée coulissante sur les deux glissières 12. L'ensemble assise et dossier 74 est articulé à l'embase par l'intermédiaire d'un deuxième axe d'articulation B-B. En particulier, l'armature d'assise 70 est articulée à l'embase 68 par l'intermédiaire du deuxième axe d'articulation B-B. Le deuxième axe d'articulation B-B s'étend selon la direction transversale Y-Y.

Le deuxième siège 72 comporte un quatrième actionneur 25Y configuré pour incliner l'ensemble assise et dossier 74 par rapport à l'embase 68 autour du deuxième axe d'articulation B-B. L'ensemble assise et dossier 74 du deuxième siège 72 sont propres à pivoter simultanément autour du deuxième axe d'articulation B-B. L'angle entre l'assise et le dossier n'est pas modifié lors de ce pivotement. Le quatrième actionneur 25Y peut comprendre une carte électronique 244 propre à générer une information relative à la course effectuée par le quatrième actionneur 25Y.

Le système de détection 4 illustré sur la figure 11 est identique au système de détection illustré sur la figure 2 et ne sera pas décrit une seconde fois.

Les données permettant la caractérisation de la localisation relative du deuxième siège 72 par rapport à la position de la boucle de retenue 16 et éventuellement de la sangle 13 de la ceinture de sécurité et comprennent le point repère R, la droite repère D, le point d'origine O, le premier point de localisation A1, un deuxième point de localisation A2, une distance DI, une deuxième longueur L2 et le point de projection F.

En référence à la figure 11, le procédé de détection selon un quatrième mode de réalisation de l'invention est décrit.

Ce procédé de détection débute par une phase préalable 321. Au cours de la phase préalable, le point repère R, la droite repère D, le point d'origine O, la position du point de projection F par rapport au point d'origine O, la position de la zone d'insécurité ZI par rapport au point d'origine O, la première longueur L1, la première cartographie C1, la deuxième cartographie C2, la troisième cartographie C3 et la table de correspondance TC sont définis de la même manière décrite dans la phase préalable 32 du procédé de détection selon le premier mode de réalisation illustré sur la figure 6.

Au cours de cette phase préalable 321, la plus petite distance entre le point repère R et un point du deuxième axe d'articulation B-B est déterminée par une mesure de distance par un opérateur. Cette plus petite distance est appelée deuxième longueur L2 ci-après. La deuxième longueur L2 a été illustrée sur la figure 10. La deuxième longueur L2 est fonction de la structure du siège et de l'emplacement du point repère R choisi. La deuxième longueur L2 est enregistrée dans la mémoire 28.

En variante, la deuxième longueur L2 peut être estimée par le processeur en fonction de l'information de course effectué par le premier actionneur 18Y et de la première cartographie C1. Cette variante est plus précise car elle tient compte du fait que la deuxième longueur L2 varie avec l'angle d'inclinaison du dossier par rapport à l'assise.

Lors de la phase préalable 321, une quatrième cartographie C4 est déterminée par des mesures expérimentales effectuées par un opérateur. Cette quatrième cartographie C4 définit différents deuxièmes angles d'inclinaison α2 en fonction de différentes courses effectuées par le quatrième actionneur 25Y. Le deuxième angle d'inclinaison α2 est représentatif de l'inclinaison de l'ensemble assise et dossier 74 par rapport à la droite repère D comme visible sur la figure 10. La quatrième cartographie C4 est enregistrée dans la mémoire 28.

Lors de la phase préalable 321, le deuxième point de localisation A2 est déterminée. Le deuxième point de localisation A2 est défini comme étant le projeté selon la direction de projection P d'un point du deuxième axe d'articulation B-B sur la droite repère D. Dit autrement, le deuxième point de localisation A2 est l'intersection entre la droite repère D et une droite ayant pour direction la direction de projection P et croisant le deuxième axe d'articulation B-B.

Le deuxième point de localisation A2 peut se situer à des positions différentes sur la droite repère D en fonction de la position du deuxième siège par rapport aux glissières 12. Le deuxième point de localisation A2 peut être déterminée par une mesure d'une distance DI entre le premier point de localisation A1 et le deuxième point de localisation A2. Cette mesure de distance peut être réalisée par un opérateur. La distance DI est illustrée sur la figure 10.

En variante, le deuxième point de localisation A2 peut être déterminé de la même façon que le premier point de localisation A1 en établissant deux cartographies à l'aide de mesures expérimentales en faisant fonctionner le deuxième actionneur 20X puis le troisième actionneur 22ZX

La deuxième longueur L2, la quatrième cartographie C4, la distance DI sont à définir préalablement à l'utilisation du procédé pour chaque type de siège et chaque agencement de véhicule. En conséquence, la phase préalable 321 doit être effectuée à chaque fois qu'un élément du deuxième siège est modifié ou que la position relative du deuxième siège par rapport à la position de l'attache de la boucle de 16 de la ceinture de sécurité est modifiée.

La première longueur L1, la deuxième longueur L2, la distance DI, la position du point de projection F par rapport au point d'origine O, la position de la zone d'insécurité ZI par rapport au point d'origine O, la table de correspondance TC, la première cartographie C1, la deuxième cartographie C2, la troisième cartographie C3 et la quatrième cartographie C4 sont enregistrées dans la mémoire à l'issus de la phase préalable.

Le procédé de détection selon le quatrième mode de réalisation comprend les étapes suivantes mises en œuvre par le processeur 26 à partir des informations enregistrées dans la mémoire 28 au cours de la phase préalable et des informations de course effectuée reçues des cartes électroniques des actionneurs.

Le procédé se poursuit par une étape 341.

Lorsque la phase préalable 321 a été réalisée auparavant, le procédé de détection selon le quatrième mode de réalisation débute par l'étape 341.

Au cours de l'étape 341, l'interface homme-machine 31 transmet au quatrième actionneur 25Y une demande d'inclinaison de l'ensemble assise et dossier 74 autour du deuxième axe d'articulation B-B. Le quatrième actionneur 25Y fait pivoter l'ensemble assise et dossier 74 autour du deuxième axe d'articulation B-B par rapport à l'embase 68. La mise en fonctionnement du quatrième actionneur entraine la mise en œuvre par le processeur des étapes 351,361,381, 401,421,441,461 ,481 et 491 décrites ci-après. Les étapes 351,361,381, 401,421,441,461 ,481 et 491 ont lieu en continu au cours du mouvement de pivotement de l'ensemble assise et dossier.

Pendant une étape 351, la carte électronique 241 transmet une information relative à la course effectuée par le quatrième actionneur 25Y au processeur 26.

Pendant une étape 361, le processeur 26 détermine, le deuxième angle d'inclinaison α2 de l'ensemble assise et dossier 74 par rapport à la droite repère D à partir de l'information relative à la course effectuée reçue du quatrième actionneur, de la quatrième cartographie C4 et du deuxième angle d'inclinaison précédent. Le deuxième angle d'inclinaison précédent est l'angle d'inclinaison de l'ensemble assise et dossier 74 avant pivotement de ceux-ci au cours de l'étape 341. Le deuxième angle d'inclinaison précédent est stocké dans la mémoire 28. Le processeur 26 enregistre le nouveau deuxième angle d'inclinaison α2 dans la mémoire 28.

Au cours d'une étape 381, une deuxième amplitude d'inclinaison IN2 du dossier est déterminée par multiplication d'un cosinus du deuxième angle d'inclinaison α2 par la deuxième longueur L2. La deuxième longueur L2 a été enregistrée dans la mémoire. Comme visible sur la figure 11, la deuxième amplitude d'inclinaison IN2 est la distance entre le deuxième point de localisation A2 et le projeté PR du point repère R sur la droite repère D, selon la direction de projection P.

La deuxième amplitude d'inclinaison IN2 est enregistrée dans la mémoire 28.

Au cours d'une étape 401, un deuxième intervalle I2 est déterminé. Le deuxième intervalle I2 est la distance entre le point d'origine O et le deuxième point de localisation A2. Le deuxième intervalle I2 dépend de la position du deuxième siège 72.

Pour déterminer le deuxième intervalle I2, la position du deuxième point de localisation A2 par rapport au point d'origine O sur la droite repère D est recherchée.

La position du deuxième point de localisation A2 peut être obtenue par une recherche d'une position du deuxième point de localisation A2 préalablement enregistrée dans la mémoire ou de la position du premier point de localisation A1 préalablement enregistrée dans la mémoire et de la distance DI. Cette méthode est utilisée lorsque le deuxième actionneur et le troisième actionneur ne sont pas en fonctionnement.

La position du deuxième point de localisation A2 peut être déterminée à partir de la distance DI, de la deuxième cartographie C2 et de la course ayant été effectuée par le deuxième actionneur 20X. Cette méthode est utilisée lorsque le deuxième actionneur est en fonctionnement. Dans ce cas, la position du premier point de localisation A1 est obtenue à l'aide de la deuxième cartographie et de la course effectuée par le deuxième actionneur. La position du deuxième point de localisation A2 est obtenue en retranchant la distance DI à la distance entre le point d'origine O et la position du premier point de localisation A1.

La position du deuxième point de localisation A2 par rapport au point d'origine O sur la droite repère D peut être déterminée à partir de la distance DI, de la troisième cartographie C3 et de la course ayant été effectuée par le troisième actionneur 22ZX. Cette méthode est utilisée lorsque le troisième actionneur est en fonctionnement. Au cours d'une étape 421, l'écart E est déterminé par addition de la deuxième amplitude d'inclinaison IN2 déterminée au cours de l'étape 381 et du deuxième intervalle I2 déterminé au cours de l'étape 401. L'écart E est la distance entre le point d'origine O et le projeté PR du point repère R sur la droite repère D, selon la direction de projection P.

Au cours d'une étape 441, la position du point limite L est déterminée en fonction de la position du premier point de localisation A1 à partir de la table de correspondance TC. A cet effet, la position du premier point de localisation A1 peut être obtenue à partir de la position du deuxième point de localisation A2 et de la distance DI. A cet effet, la position du deuxième point de localisation A2 déterminé au cours de l'étape 401 est utilisé. Puis, le seuil S est déterminé. Le seuil S est la distance entre le point d'origine O et la position du point limite L. L'écart E est comparé au seuil S.

Lorsque l'écart E déterminé est supérieur au seuil S, un signal représentatif d'un risque d'insécurité est généré, au cours d'une étape 461.

La génération du signal représentatif d'un risque d'insécurité peut entrainer une mise à l'arrêt du fonctionnement du quatrième actionneur 25Y au cours d'une étape 481.

Lorsque l'écart E déterminé est inférieur au seuil S, le procédé se poursuit, au cours d'une étape 491, par la mise en œuvre du procédé de détection selon le premier mode de réalisation (illustré par l'étape 34), ou la mise en œuvre du procédé de détection selon le deuxième mode de réalisation (illustré par l'étape 50), ou la mise en œuvre du procédé de détection selon le troisième mode de réalisation (étape 60) ou la poursuite de la mise en œuvre du procédé selon le quatrième mode de réalisation (illustré par l'étape 341) en fonction de la nouvelle demande de déplacement du siège demandé par l'occupant du siège.

Le procédé de détection selon le quatrième mode de réalisation peut être réalisé seul ou avec l'un des trois autres modes de réalisation. Deux modes de réalisation parmi les quatre modes de réalisation peuvent être réalisés ensemble ou un par un.

## Revendications

1. Procédé de détection de positions d'un siège (2,72) d'un véhicule pouvant causer un risque d'insécurité pour l'occupant du siège ; le siège (2,72) comportant au moins une glissière (12) s'étendant selon une direction longitudinale (X), une assise (6) montée coulissante sur la au moins une glissière, et un dossier (8, 10) articulé à l'assise par l'intermédiaire d'un premier axe d'articulation (A-A), une direction verticale (Z) étant perpendiculaire à la direction longitudinale (X) et au premier axe d'articulation (A-A),
un point repère (R) étant défini sur une zone (14) du dossier du siège,
une droite repère (D) étant définie,
un point d'origine (O) étant défini sur la droite repère, **caractérisé en ce que** le procédé comprend :
a) une détermination (42, 421) d'un écart (E) entre le point d'origine (O) et le projeté (PR) du point repère (R) sur la droite repère (D) et selon une direction de projection (P),
b) une comparaison (44,441) de l'écart (E) à un seuil (S),
c) une génération (46, 461) d'un signal représentatif d'un risque d'insécurité lorsque l'écart (E) est supérieur au seuil (S).

2. Procédé de détection selon la revendication 1, dans lequel la détermination (42) de l'écart (E) comprend une détermination (40, 54, 64) d'un premier intervalle (I1) entre le point d'origine (O) et une position sur la droite repère (D) d'un premier point de localisation (A1), le premier point de localisation (A1) étant le projeté sur la droite repère (D) selon la direction de projection (P) d'un point du premier axe d'articulation (A-A) du siège.

3. Procédé de détection selon la revendication 2, dans lequel le seuil (S) est déterminé en fonction de la position du premier point de localisation (A1) et d'une table de correspondance (TC).

4. Procédé de détection selon l'une quelconques des revendications 2 et 3, qui comprend une détermination (40,54,64) de la position du premier point de localisation (A1) à partir d'un premier paramètre, le premier paramètre étant obtenu à partir d'une deuxième cartographie (C2) et d'une deuxième valeur représentative d'une course effectuée par un deuxième actionneur (20X) ; le deuxième actionneur (20X) étant configuré pour déplacer le siège par rapport à la au moins une glissière (12) selon la direction longitudinale (X).

5. Procédé de détection selon l'une quelconque des revendications 2 à 4, qui comprend une détermination de la position du premier point de localisation (A1) à partir d'un deuxième paramètre, le deuxième paramètre étant obtenu à partir d'une troisième cartographie (C3) et d'une troisième valeur représentative d'une course effectuée par un troisième actionneur (22ZX), le troisième actionneur (22ZX) étant configuré pour relever ou abaisser le siège.

6. Procédé de détection selon la combinaison des revendications 4 et 5, dans lequel le deuxième paramètre est additionné ou soustrait au premier paramètre en fonction du sens du déplacement du siège généré par le deuxième actionneur et du sens du déplacement du siège généré par le troisième actionneur.

7. Procédé de détection selon l'une quelconque des revendications 1 à 6, dans lequel la détermination (42) de l'écart (E) comprend une détermination (36) d'un premier angle d'inclinaison (α1) du dossier par rapport à la droite repère (D), le premier angle d'inclinaison (α1) étant déterminé à partir d'une première cartographie (C1) et d'une première valeur représentative d'une course effectuée par un premier actionneur (18Y), le premier actionneur (18Y) étant configuré pour incliner le dossier (8) par rapport à l'assise (6).

8. Procédé de détection selon la revendication 7, dans lequel la détermination de l'écart (E) comprend une détermination (38) d'une première amplitude d'inclinaison (IN1) représentative de l'inclinaison du dossier par rapport à la droite repère (D), la première amplitude d'inclinaison (IN1) est déterminée par multiplication d'un cosinus du premier angle d'inclinaison (α1) par une première longueur (L1), la première longueur (L1) étant la plus courte distance entre le point repère (R) et un point du premier axe d'articulation (A-A).

9. Procédé de détection selon la combinaison des revendications 2 et 8, dans lequel la détermination (42) de l'écart (E) comprend l'addition du premier intervalle (11) et de la première amplitude d'inclinaison (IN1).

10. Procédé de détection selon l'une quelconque des revendications 1 à 8, dans lequel le siège (2) comporte une embase (68) montée coulissante sur ladite au moins une glissière (12) et un ensemble assise et dossier (74), l'ensemble assise et dossier (74) étant articulé à l'embase par l'intermédiaire d'un deuxième axe d'articulation (B-B), et dans lequel la détermination de l'écart (E) comprend une détermination (381) d'un deuxième intervalle (I2) entre le point d'origine (O) et une position d'un deuxième point de localisation (A2), le deuxième point de localisation (A2) étant le projeté sur la droite repère (D) selon la direction de projection (P) d'un point du deuxième axe d'articulation (B-B) du siège.

11. Procédé de détection selon la revendication 10, dans lequel la détermination de l'écart (E) comprend une détermination (361) d'un deuxième angle d'inclinaison (α2), le deuxième angle d'inclinaison (α2) étant représentatif de l'inclinaison de l'ensemble assise et dossier (74) par rapport à la droite repère (D), le deuxième angle d'inclinaison (α2) étant déterminé à partir d'une quatrième cartographie (C4) et d'une quatrième valeur représentative d'une course effectuée par un quatrième actionneur (25Y), le quatrième actionneur étant configuré pour incliner l'ensemble assise et dossier (74) par rapport à l'embase (68).

12. Procédé de détection selon la revendication 11, dans lequel la détermination de l'écart (E) comprend une détermination (381) d'une deuxième amplitude d'inclinaison (IN2) de l'ensemble assise et dossier par rapport à la droite repère (D), la deuxième amplitude d'inclinaison (IN2) étant déterminée par multiplication d'un cosinus du deuxième angle d'inclinaison (α2) par une deuxième longueur (L2), la deuxième longueur (L2) étant la plus courte distance entre le point repère (R) et un point du deuxième axe d'articulation (B-B).

13. Procédé de détection selon la combinaison des revendications 10 et 12, dans lequel la détermination (421) de l'écart (E) comprend l'addition du deuxième intervalle (I2) et de la deuxième amplitude d'inclinaison (IN2).

14. Procédé de détection selon l'une quelconque des revendications 1 et 2 qui comporte un arrêt (48, 58, 66) d'au moins un actionneur en fonctionnement parmi un premier actionneur (18Y), un deuxième actionneur (20X) et un troisième actionneur (22ZX) lorsqu'un signal représentatif d'un risque d'insécurité est généré ; le premier actionneur (18Y) étant configuré pour incliner le dossier (8, 10) par rapport à l'assise (6), le deuxième actionneur (20X) étant configuré pour déplacer le siège par rapport à la au moins une glissière (12) selon la direction longitudinale (X), le troisième actionneur (22ZX) étant configuré pour relever ou abaisser le siège.

15. Procédé de détection selon l'une quelconque des revendications 10 à 14 qui comporte un arrêt (481) du quatrième actionneur (25Y) lorsqu'un signal représentatif d'un risque d'insécurité est généré, le quatrième actionneur étant configuré pour faire pivoter l'ensemble assise et dossier autour d'un deuxième axe d'articulation (B-B)..

16. Procédé de détection selon l'une quelconque des revendications 1 à 15, dans lequel le point repère (R) est situé sur une zone (14) du dossier, située au-dessus d'un plan horizontal (X, Y) passant par le milieu du dossier, le milieu du dossier étant situé entre le bord supérieure (17) et le bord inférieure (19) du dossier.

17. Procédé de détection selon l'une quelconque des revendications 1 à 15, dans lequel les étapes a) à c) ne sont pas mises en œuvre lorsque le véhicule est à l'arrêt.

18. Procédé de détection selon l'une quelconque des revendications 1 et 2, dans lequel les étapes a) à c) sont mises en œuvre à chaque fois que au moins un actionneur est mis en fonctionnement parmi un premier actionneur (18Y), un deuxième actionneur (20X) et un troisième actionneur (22ZX) ; le premier actionneur (18Y) étant configuré pour incliner le dossier (8, 10) par rapport à l'assise (6), le deuxième actionneur (20X) étant configuré pour déplacer le siège par rapport à la au moins une glissière (12) selon la direction longitudinale (X), le troisième actionneur (22ZX) étant configuré pour relever ou abaisser le siège.
